(19) Europäisches Patentamt
European Patent Office
Office européen des brevets

(11) **EP 2 761 382 B1**

(12) **EUROPEAN PATENT SPECIFICATION**

(45) Date of publication and mention
of the grant of the patent:
**07.11.2018 Bulletin 2018/45**

(21) Application number: **12780913.5**

(22) Date of filing: **17.09.2012**

(51) Int Cl.:
***G05D 23/00*** *(2006.01)*      ***G01L 27/00*** *(2006.01)*

(86) International application number:
**PCT/US2012/055733**

(87) International publication number:
**WO 2013/048804 (04.04.2013 Gazette 2013/14)**

(54) **METHOD AND SYSTEM FOR DETECTING ABNORMAL OPERATION**

METHODE UND SYSTEM ZUM TESTEN ABNORMALER VORGÄNGE

PROCÉDÉ ET SYSTÈME PERMETTANT DE DÉTECTER UN FONCTIONNEMENT ANORMAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2011 US 201113246971**

(43) Date of publication of application:
**06.08.2014 Bulletin 2014/32**

(73) Proprietor: **Rosemount Inc.
Shakopee, MN 55379 (US)**

(72) Inventors:
• **MILLER, John P.
MN 55347 (US)**

• **ZAK, Michael
MN 55346 (US)**

(74) Representative: **Vossius & Partner
Patentanwälte Rechtsanwälte mbB
Siebertstrasse 3
81675 München (DE)**

(56) References cited:
**WO-A2-2008/039993      WO-A2-2008/039993
US-A1- 2010 011 869      US-A1- 2010 011 869
US-B1- 6 311 136      US-B1- 6 701 274**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

The present invention relates to transmitters of the type used to measure a process variable of an industrial process. More specifically, the present invention relates to diagnosing a condition of the industrial process based upon the sensed process variable.

Industrial process control transmitters are used to monitor operation of industrial processes. For example, chemical refineries, food manufacturing facilities, paper pulp processing facilities, etc. are examples of industrial processes. In these industrial processes, operation of the process must be monitored. The monitoring can be used for example, inventory purposes as well as an input to a control system which controls operation of the process.

Process transmitters measure process variables such as temperature, pressure, etc. of a process fluid. Further, a measured process variable can be in turn used to calculate another process variable. For example, flow rate through a conduit or level of a fluid in a tank can be determined by measuring a pressure such as differential pressure.

When a component in an industrial process fails, the process may need to be shut down in order to repair the failed component. If a failure goes undetected, it can result in a poorly controlled process. Further, advance notification of an impending failure can provide an operator time to replace or repair a failing component prior to its ultimate failure. Various diagnostic techniques have been used to diagnose a condition of an industrial process or process transmitter. One technique is based upon calculating a standard deviation of the measured process variable.

SUMMARY

The invention is defined by the features of the independent claim. Further preferred embodiments of the invention are defined in the dependent claims.

A pressure transmitter for use in measuring a pressure of a process fluid in an industrial process. The pressure transmitter includes a pressure sensor having a pressure output related to the pressure of the process fluid. Measurement circuitry is configured to calculate a process variable of the process fluid based upon the pressure output. Diagnostic circuitry diagnoses operation of the industrial process based upon a process parameter of the pressure output. Process parameter calculation circuitry calculates the process parameter based upon pressure output and reduces the effect of an abrupt change in the pressure output on the calculated process parameter.

US 2010/011869 A1 discloses a process pulsation diagnostic system comprising a primary element, a sensor and a processor. The primary element generates a differential pressure along a fluid flow. The sensor samples the differential pressure. The processor generates a pulsation diagnostic based on a standard deviation of the differential pressure, such that the pulsation diagnostic is indicative of a degree of process pulsation in the fluid flow.

WO 2008/039993 A2 relates to a system and method for detecting abnormal situations associated with a stirred vessel in a process plant. A pressure signal associated with the pressure in the vessel is filtered by a digital filter to isolate a frequency component corresponding to pressure changes caused by the movement of a blade of an agitator through a fluid.

US 6,311,136 B1 discloses a digital flowmeter which includes a vibratable conduit, a driver connected to the conduit and operable to impart motion to the conduit, and a sensor connected to the conduit and operable to sense the motion of the conduit. A control and measurement system is connected between the driver and the sensor.

BRIEF DESCRIPTION OF THE DRAWINGS

Figure 1 is a simplified diagram of an industrial process control or monitoring system including a process variable transmitter.
Figures 2 and 3 are tables of variance.
Figure 4 is a simplified block diagram of a process variable transmitter in accordance with the present invention.
Figure 5 is a graph which illustrates pressure and resultant standard deviation calculations in a differential pressure based flow measurement system.
Figure 6 shows graphs similar to that of Figure 5 for a system using differential pressure to measure level of a process fluid in a tank which includes an agitator.

DETAILED DESCRIPTION

The present invention provides a transmitter including diagnostic functionality for diagnosing a condition of the industrial process. The condition may be a condition of other equipment within the industrial process, condition of process operation, or may be a condition of the transmitter itself.

As described in the Background section, transmitters are used in industrial process monitoring and control systems to measure a process variable of process fluids. In many instances, it is desirable to diagnose operation of equipment in the process, the process operation and/or the transmitter. Various techniques have been used to diagnose industrial processes by monitoring a sensed process variable. Different types of algorithms have been used to identify a condition of the process based upon changes in a sensed process variable. Preferably, the diagnostic algorithm is capable of distinguishing between changes in the process variable due to normal operation of the process versus changes in the process variable due to a failure or impending failure of process equipment, a failing process variable sensor, an undesirable condition of the process itself, etc. One such technique is to calculate a standard deviation of the process variable and identify changes in the calculated standard deviation which are attributable to a particular diagnostic condition of the industrial process. However, as discussed below in greater detail, sudden changes in the process variable may lead to the false detection of a diagnostic condition. The present invention provides techniques for addressing such false detections.

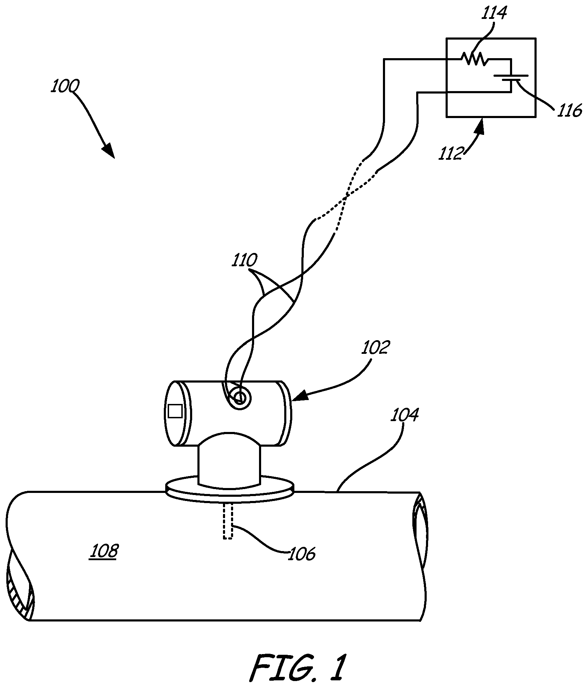

Figure 1 is a simplified block diagram showing an industrial process 100. In Figure 1, a transmitter 102 is shown coupled to a process vessel, illustrated as process piping 104. The transmitter includes a process variable signal 106 such as a pressure sensor which is arranged couple to process fluid 108 in vessel 104 in a manner which allows a process variable to be sensed. For example, a differential pressure can be sensed and correlated with a flow rate of the process fluid 108 through process piping 104. Transmitter 102 is in communication with a remote location such as a control room 112. In the embodiment illustrated in Figure 1, a two wire process control loop 110 is illustrated. The two wire process control loop 110 may operate in accordance with any desired technique including communication standards such as a two wire process control loop in which a current level ranges between a low value of 4 mA and a high value of 20 mA. Other examples of two wire process control loops include a HART® communication link in which digital signals are superimposed on an analog current level, as well as all digital formats such as Fieldbus based protocols. Other example embodiments include wireless communication techniques. In such a configuration, the connection 110 illustrated in Figure 1 comprises a wireless communication link and may include a mesh network or other communication technique. One example is the Wireless HART® communication protocol in accordance with the IEC 62591 Standard.

In one aspect, diagnostics are provided for evaluating measured process dynamics (e.g. standard deviation) in pressure transmitters. Some diagnostic techniques use an algorithm for calculating standard deviation of a process variable. Some simple filtering techniques are used to remove the effects of changes in the standard deviation due to changes in process set points. However, if there is a very fast momentary pressure spike, rapid pressure change or pressure spike, this can still have a significant effect on the calculated standard deviation. This effect may last as long as, or longer than, a user-configured sample period. This may be problematic to the end user because it increases the probability of a false detection of an abnormal diagnostic condition. The present invention addresses this problem with techniques for calculating standard deviation that are capable of filtering out the effects of sudden, but momentary fluctuations or changes in the pressure, while preserving the effect of pressure fluctuations that occur over a continuous period of time. This provides a pressure transmitter with advanced diagnostics that will be less prone to false detections of an abnormal condition due to only momentary pressure changes.

Advanced pressure diagnostics are a powerful tool for operating and maintaining industrial processes. When a pressure transmitter evaluates the process dynamics (e.g. standard deviation) and then makes this measurement available to a host system via a digital communication protocol, plant personnel can detect many abnormal conditions (e.g. plugged impulse lines, entrained gas/liquid, furnace flame instability, distillation column flooding, etc.) that would be unobservable using the traditional pressure measurement alone.

In many instances, the standard deviation as currently calculated in prior art transmitter provides a very good measure of process dynamics for use in detecting an abnormal situation. However, there are situations when the current calculation of the standard deviation can "spike", causing a false detection of an abnormal condition.

The issue of false detections comes into play both when the alert is generated by the device, and when the standard deviation is being trended in a system. For example, a momentary spike in standard deviation will cause a detection of "high variation." This alert may remain active until the user manually goes into their system and clears it.

False detections may also be an issue when the standard deviation is being trended in a system. In this case, the spike in the standard deviation will be stored in a process historian. If the user sets a simple threshold on the standard deviation for generating an alert, this could generate a false alarm in the same way. Some systems allow the end user to configure dead bands, delays, and advanced logic on alarms, and so these could be used to remediate the problem of spikes in the standard deviation causing a false alarm. However, this will require significant effort on the part of a control engineer.

Spikes in the standard deviation may also cause problems when standard deviation is trended because they can cause the off-line analysis to be more difficult. Ideally, the plant engineer should be able to correlate changes in the standard deviation with the occurrence of an abnormal condition. However, if some changes in the standard deviation are due to a rapid change in the pressure, the end user may need to employ advanced scripting or filtering to differentiate these types of changes, from prolonged changes in the standard deviation, which are more likely when an abnormal situation occurs. This extra effort needed by the end user could be a deterrent to their adopting and utilizing diagnostics.

The present invention provides a new technique for calculating standard deviation in a pressure transmitter. This new technique provides the ability to filter out these spikes in the standard deviation caused by very quick fluctuations in the pressure. At the same time, the effect of changes in process dynamics that occur over a prolonged period of time are preserved. For example, if there is a very rapid change in the pressure due to a change in the flow rate, then this will not affect the standard deviation. However, if the process dynamics change, and then remain at this new level for a length of time (for example, if there is a plugged impulse line), then the standard deviation will change accordingly.

Two techniques for obtaining the standard deviation and filtering of these sudden but momentary pressure changes are provided. In a first embodiment, the standard deviation is calculated without influence of an abrupt pressure change. More specifically, if the next measured value changes more than a pre-defined limit, then this pressure measurement value will not be included in the standard deviation calculation. The extraneous (or outlier) pressure value is discarded and the number of samples is decreased by one.

A variation of this algorithm is that in the case of a pressure change limit violation. A user-configurable number of pressure values $j$ are discarded and the number of samples is decreased by that same number $j$. Then, the overall standard deviation is calculated using the remaining samples.

More specifically, the sequence of this algorithm is as follows:

Step 1: Start with $N$ samples, corresponding to the sample window size:

For example, a windows size of 1 minute and a sample rate of 45 ms correspond approximately to 1333 samples ($N$)

Step 2: Continuously calculate the difference filtered signal ($y_k$) from the raw pressure signal ($\chi_k$).

$$\text{Equation 1:} \quad y_k = \frac{x_k - x_{k-1}}{2}$$

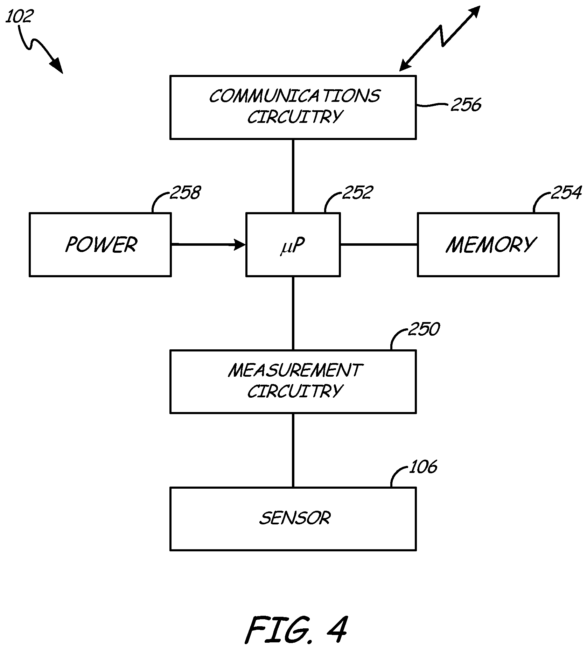

As long as the value $y_k$ does not violate a user-configurable pressure change limit ($\alpha$), then store this value $y_k$ to use for the standard deviation calculation. The pressure change limit ($\alpha$) can be an absolute value or can be a percentage. Further, the pressure change limit ($\alpha$) may have a value in one direction, i.e., as pressure is increasing and a different value in the opposite direction, i.e., as pressure is decreasing. Further still, the value of the pressure change limit ($\alpha$) may change as a function of pressure. In another words, a pressure change limit may have one value for low pressures and a different value for high pressures. This change may be a step change or may be a continuous function. The value of the pressure change limit ($\alpha$) may be stored in memory (see for example memory 254 shown in Figure 4). If it does violate that limit, then throw away a user-configurable number of values $j$. Then decrease the total number of samples in the window by $j$.

$$\text{Equation 2:} \quad M = N - j$$

Step 3: Calculate the overall standard deviation using the array of values $y_k$ that were saved:

$$\text{Equation 3:} \quad \sigma = \sqrt{\frac{1}{M} \Sigma_{i-0}^{M} y_i^2}$$

One advantage of this embodiment is that it is very flexible. The user-configurable parameters $\alpha$ and $j$ allow the end user to adapt this filtering to a wide variety of conditions. However, this also means that additional user setup may be required. Generally, it is desired that a diagnostics algorithm be as simple and easy to use as possible. However, the end user may need additional support in adjusting the parameters $\alpha$ and $j$ under various scenarios.

In a second embodiment, the standard deviation is calculated by dividing the overall sample window size into smaller "buckets", each one with its own individual standard deviation. The overall standard deviation is then calculated using only a certain middle percent of the individual standard deviations and any outlying individual standard deviations are discarded. By removing these "outlier" process noise measurements, the standard deviation are not as prone to spikes caused by a momentary increase in the process variation. Furthermore, this embodiment has an advantage in that all of the parameters can be set to a value that should be appropriate for all diagnostics applications. Thus, there are no user-configurable parameters.

The following are the steps of this second algorithm for calculating standard deviation:
Step 1: Start with $N$ samples, corresponding to the sample window size:

- Example: 1 minute $\rightarrow$ approximately 1333 samples

Step 2: Divide the number $N$ of samples into $m$ buckets of $n$ samples each, such that $m*n=N$
Example: For 1 minute use $m=16$ buckets and $n=83$ samples ($m*n=1328$)
Label the buckets B1, B2, ... $B_m$

| $B_1$ | $B_2$ | $B_3$ | $B_4$ | $B_5$ | $B_6$ | $B_7$ | $B_8$ | $B_9$ | $B_{10}$ | $B_{11}$ | $B_{12}$ | $B_{13}$ | $B_{14}$ | $B_{15}$ | $B_{16}$ |
|---|---|---|---|---|---|---|---|---|---|---|---|---|---|---|---|

Step 3: Continuously calculate difference filtered signal ($y_k$) from the raw pressure signal ($x_k$)

$$\text{Equation 4:} \quad y_k = \frac{x_k - x_{k-1}}{2}$$

Step 4: For the first bucket ($B_1$) calculate the variance (square of standard deviation) using the first $n$ samples:

$$\text{Equation 5:} \quad S_1 = \frac{1}{n} \sum_{i=1}^{n} y_k^{\,2}$$

Calculate $S_2$ for the second bucket $B_2$, using the next $n$ samples.
Repeat this until the variance is calculated for each of the $m$ buckets. Thus, we now have $m$ different S$j$ variance values: $S_1, S_2, ... S_m$.
Step 5: Sort the variance values from largest to smallest. Let $I1$ be the index of the largest of the S$j$ values, $I2$ be the index of the second largest $S_j$ value, $I3$ be the index of the third largest S$j$ value, and so forth, until $Im$ is the index of the smallest $S_j$ value. Thus, the S$j$ values are now sorted such that:

$$\text{Equation 6:} \quad S_{I1} \geq S_{I2} \geq S_{I3} \geq \ldots \geq S_{Im}$$

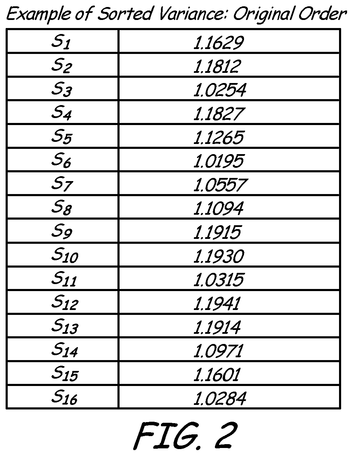

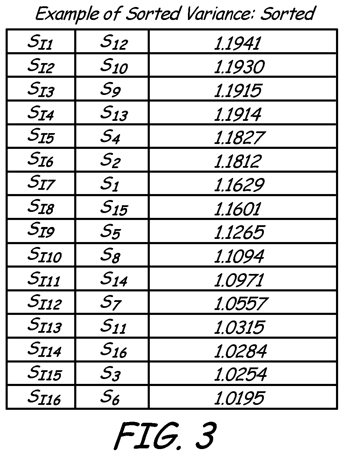

Figures 2 and 3 are tables showing the unsorted and sorted variance, respectively.
Step 6: Take the overall variance to be the average of the middle $m$-4 $S_j$ values. (That is, exclude the largest 2 and smallest 2 $S_j$ values.)
Then the overall variance is calculated as:

$$\text{Equation 7:} \quad S = \frac{1}{m-4} \sum_{j=3}^{m-2} S_{Ij}$$

In the example with $m=16$ buckets, as shown above, the overall variance would be:

$$\text{Equation 8:} \quad S = \frac{1}{12} \sum_{j=3}^{14} S_{Ij}$$

$$\text{Equation 9:} \quad S = \frac{S_9 + S_{13} + S_4 + S_2 + S_1 + S_{15} + S_5 + S_8 + S_{14} + S_7 + S_{11} + S_{16}}{12} -$$

Note that when $m=16$, only the mid 75% of process variation measurements over the given sampling window are used to calculate the standard deviation. Typically, this is sufficient such that for any given sample window (e.g. 1 minute) the majority of process data is still used in the standard deviation calculation.
Step 7: Finally, the standard deviation is the square root of the variance:

Equation 10: $\qquad \sigma = \sqrt{S}$

Any number B, such that 2*B<m, may be used as the number of bins to discard at the top and the bottom of the standard deviation calculation. However, B=2 bins, guarantees that if there is ever just 1 "blip" during the sample window, this blip will always be removed. If one were to use just 1 bin, and the "blip" happened to fall on the border of 2 bins, then part of the blip would still influence the standard deviation calculation. Likewise, to choose B=3 bins does not give any advantage for removing a "blip" because the assumption of this algorithm is that there will never be more than one "blip" during a sample window. If there ever were more than one blip during the sample window, then this should be considered part of the normal process noise.

This process can be repeated to continuously calculate a moving-average standard deviation. Using the next $n$ samples, the next variance $S_j$ is calculated. Then, the sorting routine will use this next $S_j$ value, along with the previous $m$-1 $S_j$ values that had already been calculated. The oldest $S_j$ value is discarded to make room for the new value. Because the previous 15 $S_j$ values have already been sorted, the algorithm needs only to find the right place for the new $S_j$ value. It does not need to re-sort all $m$ $S_j$ values.

In order to observe the performance of these techniques, their operation was simulated. It is possible to observe how these new methods of standard deviation calculation perform under different real-life data sets.

Figure 4 is a simplified block diagram showing circuitry of transmitter 102. Transmitter 102 includes measurement circuitry 250 which couples to pressure sensor 106 and provides an output to a microprocessor 252. For example, the measurement circuitry 250 can be used to compensate for variations in the output of the process variable sensor 106 and convert an analog signal to a digital signal for use by the microprocessor 252. The microprocessor 252 operates in accordance with instructions stores in memory 254 and communicates in the industrial process 100 using communication circuitry 256. As discussed previously, the communication may occur using both wired or wireless techniques. A power source 258 provides power to the circuitry of transmitter 102. The power may be generated using power received through the communication circuitry 256, or may be through some other power source such as an external power supply, an internal power supply such as a battery or the like, or other energy sources such as solar cells, etc.

During operation, the microprocessor 202 operates in accordance with instructions stored in memory 204 to calculate the standard deviation as discussed above. The standard deviation calculation can use the memory 204 to store measurements and calculation in the calculating process. The calculated standard deviation may then be output by microprocessor 202 using, for example, communication circuitry 206. Similarly, threshold settings or the like may be stored in memory 204 and used by microprocessor 202 to trigger an alarm based upon the calculated standard deviation. A trigger to the alarm can also be communicated using communication circuitry 206.

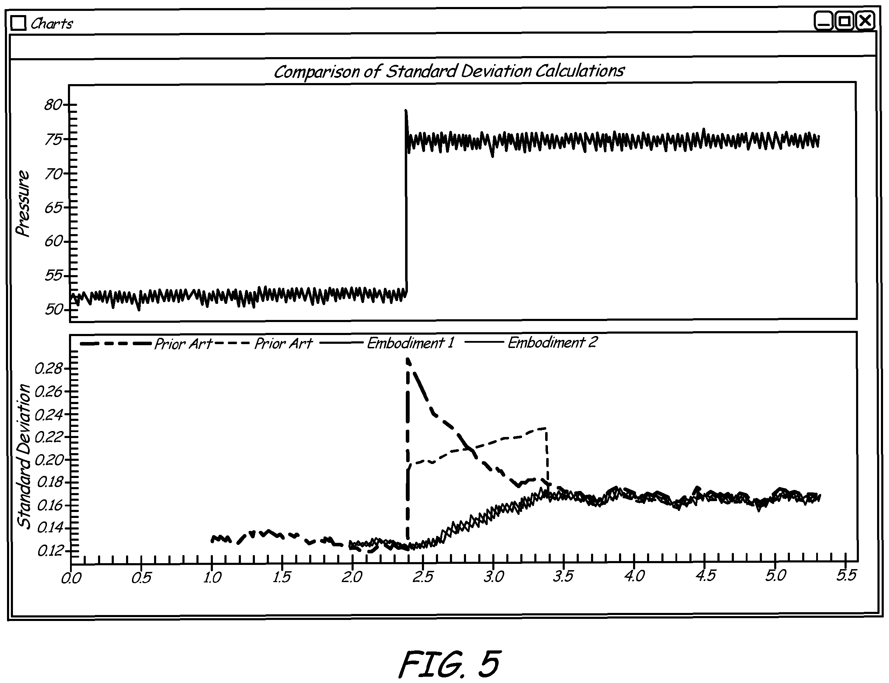

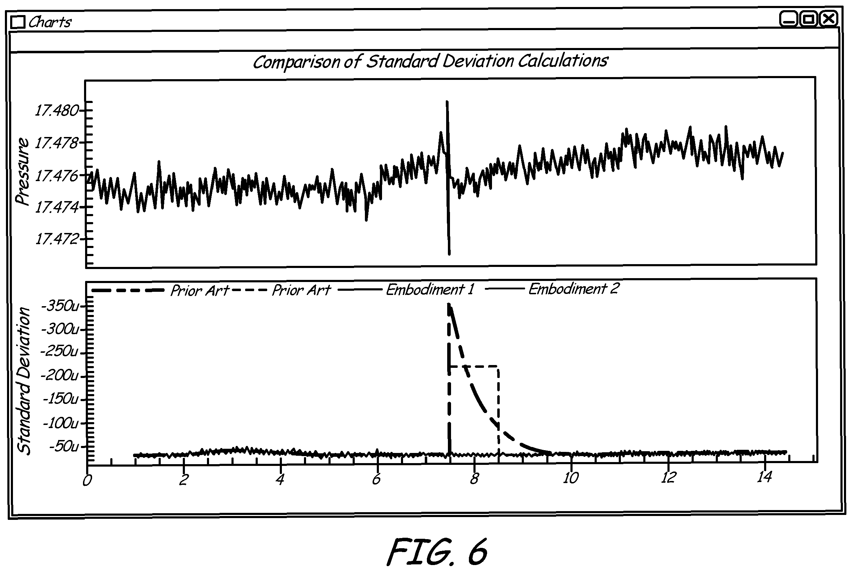

Figure 5 is a graph which illustrates the differences between new standard deviation calculations for an example data set based upon a measured differential pressure for example a differential pressure used to calculate flow rate of a processed fluid. The upper graph in Figure 5 shows a step change in the measured pressure. The lower graph illustrates standard deviations calculated based upon two prior art techniques along with the two embodiments described herein. As illustrated in Figure 5, the two embodiments of the invention provide a much smoother reaction to the step change in pressure. Figure 6 is a similar graph showing data taken from an agitator system. For example, a tank filled with a process fluid includes a mixer that spins creating motion and turbulence in the process fluid. The level of the tank is measured using a differential pressure measurement which is illustrated in the upper graph of Figure 5. During operation, a momentary fluctuation in the pressure occurs and the resultant standard deviation calculations are illustrated in the lower graph of Figure 5. Similar to the examples shown in Figure 6, the two prior art techniques are highly sensitive to the momentary fluctuation. In contrast, the two example embodiments of the present invention yield a smooth transition in the calculated standard deviation.

The standard deviation can be of the process variable sensor output, or of other process variable which are a function of the sensor output. As used herein, the term, "blip" refers to an abrupt change in a measurement such as a step change, a very momentary pressure fluctuation, a very quick pressure change that also quickly returns to its original value, or combinations thereof, etc. These are examples of an abrupt change in the measurement. In the above description, the use of a standard deviation is provided as an example. However, the present application is applicable to any statistical parameter, and further applicable with respect to any type of process parameter including those which are not statistical. Examples of process parameters, include, but are not limited to, variance, root-mean-square determinations, Fourier transforms, power spectrum, filter including high, low and band-pass filters, etc. Further, in one configuration, the process parameter is calculated using a combination of both the above described calculation techniques. For example, the first calculation technique may be applied prior to application of the second calculation technique, or in the opposite order. Similarly, the first calculation technique can be applied to individual process parameter calculations used in the second calculation technique. Other combinations may also be employed.

**Claims**

1. A pressure transmitter (102) for use in measuring a pressure of a process fluid in an industrial process, comprising:

    a pressure sensor (106) having a pressure output related to the pressure of the process fluid;
    measurement circuitry (250) configured to:

        compensate for variations in the pressure output of the pressure sensor (106) and convert an analog signal to a digital signal for use by a microprocessor (202, 252); and
        calculate a process variable of the process fluid based upon the pressure output; and

    a microprocessor (202, 252) configured to:

        calculate a standard deviation based upon the pressure output;
        reduce an effect of an abrupt change in the pressure output on the calculated standard deviation by filtering out spikes in the standard deviation caused by quick fluctuations in the pressure, such as by discarding a number of samples of the pressure output and then use the remaining samples for the calculation of the standard deviation during a pressure change limit ($\alpha$) violation; and
        subsequently, identify changes in the calculated standard deviation which are attributable to a particular diagnostic condition of the industrial process.

2. A method in a process transmitter (102) of the type used to measure pressure of a process fluid in an industrial process, the method for diagnosing operation of the industrial process comprising:

    receiving with measurement circuitry (250), a pressure signal from a pressure sensor (106) coupled to the process fluid;
    calculating with the measurement circuitry (250), a process variable of the process fluid based upon the pressure signal;
    calculating with a microprocessor (202, 252), a standard deviation of the pressure signal and reducing an effect of an abrupt change on a calculated standard deviation by filtering out spikes in the standard deviation caused by quick fluctuations in the pressure, such as by discarding a number of samples of the pressure output and then use the remaining samples for the calculation of the standard deviation during a pressure change limit ($\alpha$) violation; and
    diagnosing and outputting operation of the industrial process based upon changes in the calculated standard deviation, wherein the changes are attributed to a particular diagnostic condition of the industrial process.

3. The pressure transmitter (102) of claim 1 or the method of claim 2 wherein the pressure change limit ($\alpha$) comprises an absolute value, or a percentage value, wherein the pressure change limit ($\alpha$) is a function of measured pressure.

4. The pressure transmitter (102) of claim 1 or the method of claim 2 wherein a number of discarded samples are greater than one.

5. The pressure transmitter (102) of claim 1 or the method of claim 2 wherein the standard deviation circuitry divides a plurality of sampled values of the pressure output into buckets of samples.

6. The pressure transmitter (102) or the method of claim 5 wherein at least one of the buckets is discarded in the standard deviation calculation, wherein the discarded bucket is preferably at a high or low end of the standard deviation.

7. The pressure transmitter (102) or the method of claim 5 wherein the standard deviation circuitry calculates a variance for each of the plurality of buckets.

8. The pressure transmitter (102) or the method of claim 7 wherein at least one of the buckets is discarded from the standard deviation calculation based upon its calculated variance.

**Patentansprüche**

1. Druckmessumformer (102) zur Verwendung beim Messen eines Drucks eines Prozessfluids in einem industriellen Prozess, der aufweist:

   einen Drucksensor (106) mit einer Druckausgabe, die sich auf den Druck des Prozessfluids bezieht,
   eine Messschaltungsanordnung (250), die ausgelegt ist zum:

   Kompensieren von Variationen der Druckausgabe des Drucksensors (106) und Wandeln eines Analogsignals in ein Digitalsignal zur Verwendung durch einen Mikroprozessor (202, 252) und
   Berechnen einer Prozessvariablen des Prozessfluids auf der Grundlage der Druckausgabe und

   einen Mikroprozessor (202, 252), der ausgelegt ist zum:

   Berechnen einer Standardabweichung auf der Grundlage der Druckausgabe,
   Verringern der Auswirkung einer abrupten Änderung der Druckausgabe auf die berechnete Standardabweichung durch Herausfiltern von Spikes in der Standardabweichung, die durch schnelle Druckschwankungen hervorgerufen werden, beispielsweise durch Verwerfen einer Anzahl von Abtastwerten der Druckausgabe und anschließendes Verwenden der restlichen Abtastwerte für die Berechnung der Standardabweichung während einer Verletzung einer Druckänderungsgrenze ($\alpha$) und
   anschließend Identifizieren von Änderungen der berechneten Standardabweichung, die auf eine bestimmte diagnostische Bedingung des industriellen Prozesses zurückzuführen sind.

2. Verfahren, das in einem Prozessumformer (102) des Typs ausgeführt wird, der zur Messung eines Drucks eines Prozessfluids in einem industriellen Prozess verwendet wird, wobei das Verfahren zur Diagnose des Betriebs des industriellen Prozesses aufweist:

   Empfangen eines Drucksignals von einem mit dem Prozessfluid gekoppelten Drucksensor (106) mit der Messschaltungsanordnung (250),
   Berechnen einer Prozessvariablen des Prozessfluids auf der Grundlage des Drucksignals mit der Messschaltungsanordnung (250),
   Berechnen der Standardabweichung des Drucksignals und Verringern der Auswirkung einer abrupten Änderung auf die berechnete Standardabweichung durch Herausfiltern von Spikes in der Standardabweichung, die durch schnelle Druckschwankungen hervorgerufen werden, beispielsweise durch Verwerfen einer Anzahl von Abtastwerten der Druckausgabe und anschließendes Verwenden der restlichen Abtastwerte für die Berechnung der Standardabweichung während einer Verletzung einer Druckänderungsgrenze ($\alpha$) mit einem Mikroprozessor (202, 252) und
   Diagnostizieren und Ausgeben des Betriebs des industriellen Prozesses auf der Grundlage von Änderungen der berechneten Standardabweichung, wobei die Änderungen auf eine bestimmte diagnostische Bedingung des industriellen Prozesses zurückzuführen sind.

3. Druckmessumformer (102) nach Anspruch 1 oder Verfahren nach Anspruch 2, wobei die Druckänderungsgrenze ($\alpha$) einen Absolutwert oder einen Prozentwert aufweist, wobei die Druckänderungsgrenze ($\alpha$) eine Funktion des gemessenen Drucks ist.

4. Druckmessumformer (102) nach Anspruch 1 oder Verfahren nach Anspruch 2, wobei die Anzahl der verworfenen Abtastwerte größer als eins ist.

5. Druckmessumformer (102) nach Anspruch 1 oder Verfahren nach Anspruch 2, wobei die Standardabweichungs-Schaltungsanordnung mehrere Abtastwerte der Druckausgabe in Abtastwert-Buckets unterteilt.

6. Druckmessumformer (102) oder Verfahren nach Anspruch 5, wobei wenigstens einer der Buckets bei der Berechnung der Standardabweichung verworfen wird, wobei der verworfene Bucket vorzugsweise am hohen oder unteren Ende der Standardabweichung liegt.

7. Druckmessumformer (102) oder Verfahren nach Anspruch 5, wobei die Standardabweichungs-Schaltungsanordnung die Varianz für jeden der mehreren Buckets berechnet.

8. Druckmessumformer (102) oder Verfahren nach Anspruch 7, wobei wenigstens einer der Buckets aus der Standardabweichungsberechnung auf der Grundlage seiner berechneten Varianz verworfen wird.

**Revendications**

1. Transmetteur de pression (102) destiné à être utilisé pour mesurer la pression d'un fluide de processus dans un processus industriel, comprenant :

   un capteur de pression (106) présentant une sortie de pression connexe à la pression du fluide de processus ;
   un montage de circuits de mesure (250) configuré de manière à :

   compenser des variations de la sortie de pression du capteur de pression (106), et convertir un signal analogique en un signal numérique destiné à être utilisé par un microprocesseur (202, 252) ; et
   calculer une variable de processus du fluide de processus sur la base de la sortie de pression ; et

   un microprocesseur (202, 252) configuré de manière à :

   calculer un écart-type sur la base de la sortie de pression ;
   réduire l'effet d'une variation brusque de la sortie de pression sur l'écart-type calculé, en filtrant des pointes de l'écart-type occasionnées par des fluctuations rapides de la pression, par exemple en éliminant un nombre d'échantillons de la sortie de pression, et utiliser ensuite les échantillons restants pour le calcul de l'écart-type au cours d'une violation de limite de variation de pression ($\alpha$) ; et
   subséquemment, identifier des variations de l'écart-type calculé qui sont attribuables à un état diagnostique spécifique du processus industriel.

2. Procédé mis en oeuvre dans un transmetteur de pression (102) du type utilisé pour mesurer la pression d'un fluide de processus dans un processus industriel, le procédé, pour diagnostiquer le fonctionnement du processus industriel, comprenant les étapes ci-dessous consistant à :

   recevoir, avec un montage de circuits de mesure (250), un signal de pression provenant d'un capteur de pression (106) couplé au fluide de processus ;
   calculer, avec le montage de circuits de mesure (250), une variable de processus du fluide de processus sur la base du signal de pression ;
   calculer, avec un microprocesseur (202, 252), un écart-type du signal de pression et réduire un effet d'une variation brusque sur un écart-type calculé en filtrant des pointes de l'écart-type occasionnées par des fluctuations rapides de la pression, par exemple en éliminant un nombre d'échantillons de la sortie de pression, et utiliser ensuite les échantillons restants pour le calcul de l'écart-type au cours d'une violation de limite de variation de pression ($\alpha$) ; et
   diagnostiquer et fournir en sortie un fonctionnement du processus industriel sur la base de variations de l'écart-type calculé, dans lequel les variations sont attribuées à un état diagnostique spécifique du processus industriel.

3. Transmetteur de pression (102) selon la revendication 1, ou procédé selon la revendication 2, dans lequel la limite de variation de pression ($\alpha$) comprend une valeur absolue ou une valeur en pourcentage, dans lequel la limite de variation de pression ($\alpha$) est fonction de la pression mesurée.

4. Transmetteur de pression (102) selon la revendication 1, ou procédé selon la revendication 2, dans lequel un nombre d'échantillons éliminés est supérieur à un.

5. Transmetteur de pression (102) selon la revendication 1, ou procédé selon la revendication 2, dans lequel le montage de circuits d'écart-type divise une pluralité de valeurs échantillonnées de la sortie de pression en des seaux d'échantillons.

6. Transmetteur de pression (102) ou procédé selon la revendication 5, dans lequel au moins l'un des seaux est éliminé dans le calcul d'écart-type, dans lequel le seau éliminé se situe de préférence à une extrémité supérieure ou inférieure de l'écart-type.

7. Transmetteur de pression (102) ou procédé selon la revendication 5, dans lequel le montage de circuits d'écart-type calcule une variance pour chaque seau de la pluralité de seaux.

8. Transmetteur de pression (102) ou procédé selon la revendication 7, dans lequel au moins l'un des seaux est éliminé du calcul d'écart-type sur la base de sa variance calculée.

*FIG. 1*

*Example of Sorted Variance: Original Order*

| | |
|---|---|
| $S_1$ | 1.1629 |
| $S_2$ | 1.1812 |
| $S_3$ | 1.0254 |
| $S_4$ | 1.1827 |
| $S_5$ | 1.1265 |
| $S_6$ | 1.0195 |
| $S_7$ | 1.0557 |
| $S_8$ | 1.1094 |
| $S_9$ | 1.1915 |
| $S_{10}$ | 1.1930 |
| $S_{11}$ | 1.0315 |
| $S_{12}$ | 1.1941 |
| $S_{13}$ | 1.1914 |
| $S_{14}$ | 1.0971 |
| $S_{15}$ | 1.1601 |
| $S_{16}$ | 1.0284 |

## FIG. 2

Example of Sorted Variance: Sorted

| | | |
|---|---|---|
| $S_{I1}$ | $S_{12}$ | 1.1941 |
| $S_{I2}$ | $S_{10}$ | 1.1930 |
| $S_{I3}$ | $S_9$ | 1.1915 |
| $S_{I4}$ | $S_{13}$ | 1.1914 |
| $S_{I5}$ | $S_4$ | 1.1827 |
| $S_{I6}$ | $S_2$ | 1.1812 |
| $S_{I7}$ | $S_1$ | 1.1629 |
| $S_{I8}$ | $S_{15}$ | 1.1601 |
| $S_{I9}$ | $S_5$ | 1.1265 |
| $S_{I10}$ | $S_8$ | 1.1094 |
| $S_{I11}$ | $S_{14}$ | 1.0971 |
| $S_{I12}$ | $S_7$ | 1.0557 |
| $S_{I13}$ | $S_{11}$ | 1.0315 |
| $S_{I14}$ | $S_{16}$ | 1.0284 |
| $S_{I15}$ | $S_3$ | 1.0254 |
| $S_{I16}$ | $S_6$ | 1.0195 |

FIG. 3

*102*

COMMUNICATIONS
CIRCUITRY — *256*

POWER — *258*   μP — *252*   MEMORY — *254*

MEASUREMENT
CIRCUITRY — *250*

SENSOR — *106*

# FIG. 4

FIG. 5

FIG. 6

EP 2 761 382 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010011869 A1
- WO 2008039993 A2
- US 6311136 B1